# EUROPEAN PATENT APPLICATION

(11) **EP 1 234 502 A2**
(43) Date of publication of application: **28.08.2002**
(21) Application number: 02251197.6
(22) Date of filing: 21.02.2002
(51) Int. Cl.: A01M 1/20, A01M 25/00

(54) **Trap**

(30) Priority: 23.02.2001 GB 0104471
(71) Applicant: Green B's Ltd, Willenhall, West Midlands WV12 5HG (GB)
(72) Inventor: Butler, Martin, Willenhall, West Midlands WV12 5HG (GB)
(74) Representative: Parnham, Kevin

(57) **Abstract**

A trap 10 has an outer case 12, an inner case 14 from which a rain cover 24 extends to define apertures 30,32 between the case 12 and cover 24. In use, the inner case 14 includes an attractant, such as beer, and the apertures 30,32 are sufficient to allow slugs or snails through but limit other access. The inner case 14 is removable with collected slugs or snails whilst the outer case 12 remains buried.

## Description

This invention relates to a trap for slugs and snails. More particularly but not exclusively this invention relates to a trap for the collection and entrapment of slugs or snails in gardens.

Known examples of traps include hinged boxes designed to be placed above ground level, containing a solution such as beer to attract the slugs to a conveniently located aperture. Such traps are obtrusive and can spoil the appearance of a domestic garden. Furthermore, these slug traps may attract the attention of domestic and wild animals along with children such that the contents may spill leaving rancid beer and decayed slug or snail carcasses about a garden.

Traps which are suitable for positioning below ground level are known, however they require digging up when full and it is also difficult to calculate when the container is full without its removal from the ground.

According to the present invention there is provided a trap comprising an outer case to be buried and remain in the ground, the trap characterised in that there is a removable inner case positioned within said outer case, the inner case being adapted to collect slugs or snails and being removable from the outer case without removing the outer case from the ground.

The inner case of the trap may be transparent or translucent. The inner case may in use contain beer to attract slugs or snails therein. The inner case may also comprise indentations to indicate the amount of beer required and the level of carcasses at which the trap should be emptied.

The outer case may comprise external lugs to secure its position within the ground.

The inner case is slidably mounted within the outer case so as to facilitate easy removal therefrom. The inner case may comprise a lid portion. The lid portion may comprise at least one aperture for receiving slugs or snails. The lid portion may further comprise an upwardly extending hollow protrusion. The hollow protrusion may be provided with a cover to prevent the ingress of rain into itself and apertures within the lid portion.

An embodiment of the invention will now be described by way of example only, with reference to the accompanying drawings in which:
Fig. 1 is a cross section view through a trap incorporating a rain cover;

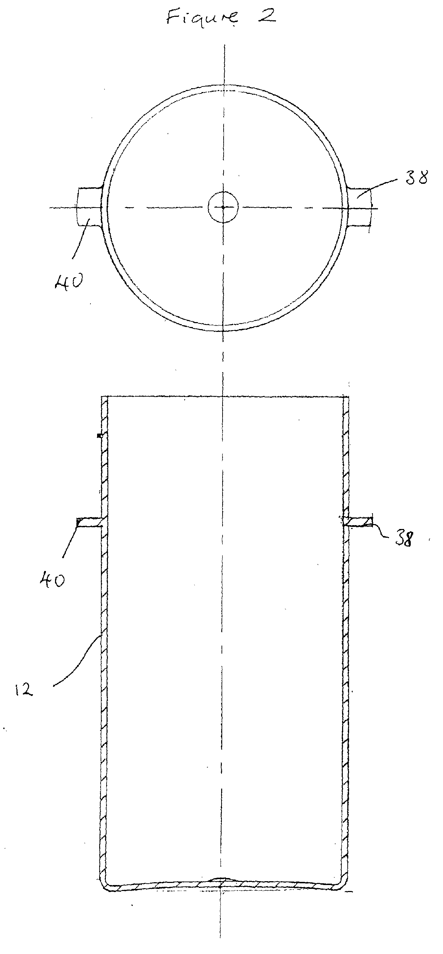

Fig. 2 is a top view of the outer case of the trap of Fig. 1:
Fig. 3 is a cross section view through the lid portion of the inner case of the trap of Fig. 1
Fig. 4 is a top view of the lid portion of Fig. 3

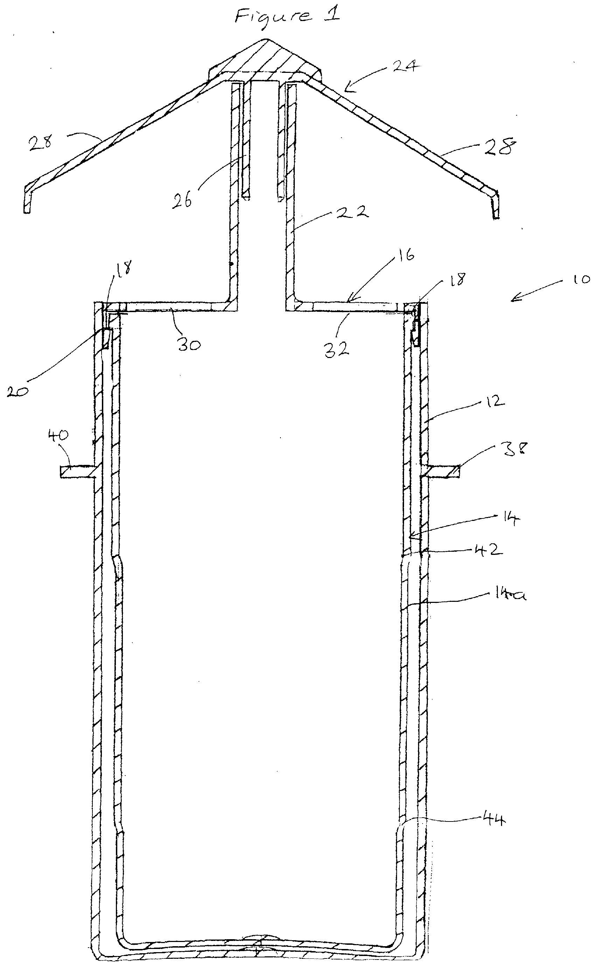

Referring to Fig. 1 a trap 10 is generally cylindrical in shape and comprises an outer case 12 and an inner case or compartment 14. The inner case 14 is slidably mounted within the outer case 12 so as to facilitate removal and insertion therein.

The inner case 14 comprises a lid portion 16 securely attached to its main cylindrical body 14a via clip 18 which forms a press fit attachment to the cylindrical body 14a underneath ridge portion 20 of the lid portion 16. This press fit arrangement ensures that the lid portion 16 of the inner case 14 is permanently attached to the cylindrical body 14a of the inner case 14 so as to form a single item. It is envisaged that, manufacturing methods permitting, the lid portion 16 of the inner case 14 could be integrally moulded with the cylindrical portion 14a.

The lid portion 16 of the inner case 14 also comprises an upwardly extending protrusion 22 located in a substantially central location of the lid portion 16. This protrusion 22 is integrally moulded with the lid portion 16. The protrusion 22 is a short cylindrical hollow pipe shaped to both form a convenient handle for removal of the inner case 14 from the outer case 12 and to provide support for a rain cover 24.

The rain cover 24 comprises a hollow downwardly extending protrusion 26 which fits within the hollow protrusion 22 of the inner case 14. The main body of the rain cover 24 comprises an umbrella portion 28 which extends over the lid portion 16 so as to prevent the ingress of rain water into the inner case 14.

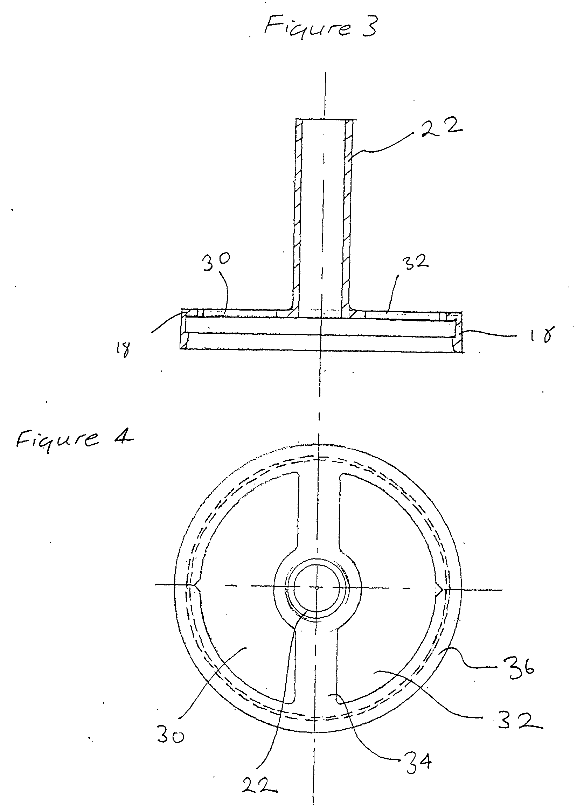

Apertures 30 and 32 are provided within the lid portion 16 of the inner case. The shape of these apertures can be seen more clearly by referring to figures 3 and 4. Each aperture 30,32 is substantially semi-circular in shape and is designed to be wide enough to receive slugs or snails which can then drop into the inner case 14. A cross member 34 provides support for a vertical hollow pipe 22 and is integrally moulded with the rim 36 of the lid portion 16.

The inner case 14 is also provided with indentations 42 and 44. Indentation 44 is a marker to show the required level of beer or other suitable substance which is known to attract slugs. The indentation 42 provides an indication of when the trap needs emptying by acting as a fill level of collected carcasses. Emptying of the trap 10 is required when the amount of slugs or snails reaches this level. Typically, the inner case 14 is also transparent or translucent to allow easier determination of the number of slugs or snails trapped.

The trap 10 or particular parts of that trap 10 such as the inner casing 14 can be impregnated or coated or formed with an attractant substance for slugs and/or snails. This attractant can take the form of a liquid or powder or encapsulated attractant held or associated with the material from which the slug trap 10 is formed. The attractant will incapacitate the slugs or snails once collected within the trap 10. Where the attractant is impregnated or associated with the material from which the trap is formed it will be appreciated that the trap will age such that the effectiveness of the slug attractant will diminish with time. However, the trap 10 or those parts of the trap 10 as required may be rejuvenated with a coating of fresh attractant by a spray or brushing process. Furthermore, attractant may be microencapsulated into the trap 10 such that there is a slow release due to cyclic heating during the day of microencapsulated attractant such that the capsules burst to release attractant as required. Attractant may be released from the inner case 14 by introducing a volume of water which will precipitate release of attractant from the material from which the inner case 14 is made or an initial coating.

The outer case 12 is provided with outwardly extending lugs 38 and 40 which ensure that once inserted within the ground, the outer case 12 is securely retained in the ground when the inner case 14 is slidably removed therefrom.

In use, the trap 10 is inserted below ground such that its lid portion 16 is substantially level with the ground surface. The rain cover 24 fits snugly within the hollow protrusion 22 such that the end of the umbrella portion 28 rests approximately 25 mm above ground level. This ensures that other animals should be prevented from entering the inner case 14a. It also may prevent children from exploring the contents of the inner case 14. If other animals do inadvertently drop into the inner case 14 they may be assisted in escaping by use of the cross member 34. Slugs or snails at ground level are attracted to the contents, for example beer, contained within the inner case 14 and thus drop through the apertures 30 and 32. Once the inner case 14 is filled with slugs or snails to its indication level 42, it is removed by pulling the vertical handle 22 thus sliding the cylindrical body 14a out from within outer case 12. The inner case 14 can then be emptied by tipping the slugs or snails out from within the inner case 14 through apertures 30, 32 and through the hollow protrusion 22. The rain cover 24 is used to protect the inner case 14 from being filled with rain water during use.

Advantageously, the trap 10 can be emptied without the need to remove the outer case 12 from beneath the ground, the inner case 14 being easily removed from the outer case 12 when required.

Normally, the hollow protrusion 22 and extending protrusion 26 are arranged to be self-locking along with the inner case 14, such that angular pulling loads cannot force release. In order to remove the rain cover 24 or inner case 14, a substantially vertical pull is required to release the lock between the hollow protrusion 22 and the extending protrusion 26.

Rings (not shown) can be located about the protrusion 22 which includes attractant for slugs or snails. The rings can be impregnated, coated or formed with the attractant. Furthermore, other parts of the trap can include or have attractant elements attached which can be rejuvenated, replaced or added to improve the attraction of the trap to snails or slugs or both.

The trap at its base or elsewhere can include heating pads to warm an attractant for improved odour dispersion and so attraction of slugs or snails. A heating pad will warm the attractant and vapour odour from the attractant.

Slug or snail attractant may be located in the cavity between the outer case 12 and the inner case 14. Thus, the inner case 14 is perforated or otherwise formed to allow the slug attractant to permeate through or its odour at least to pass through the wall of the inner case 14 to attract slugs.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A trap 10 comprising an outer case 12 to be buried and remain in the ground, the trap 10 **characterised in that** there is a removable inner case 14 position within the outer case 12, the inner case 14 being adapted to collect slugs and be removable from the outer case 12 without removing the outer case 12 from the ground.

2. A trap 10 as claimed in claim 1 wherein the inner case 14 is transparent or translucent.

3. A trap 10 as claimed in claim 1 or claim 2 wherein the inner case 14 is arranged to receive beer or another attractant in order to facilitate attraction of slugs and/or snails to the inner case 14.

4. A trap 10 as claimed in any of claims 1 to 3 wherein the inner case 14 incorporates indentations 42,44 to indicate a desired level of attractant and/or provide an indication when the trap 10 is full..

5. A trap 10 as claimed in any preceding claim wherein the trap is formed at least in part from a material incorporating attractant either as a coating or an impregnation or encapsulated within the material from which the trap 10 is formed.

6. A trap 10 as claimed in any preceding claim wherein the outer case 12 incorporates external lugs 38,40 to secure the trap 10 when buried in the ground.

7. A trap 10 as claimed in any preceding claim wherein the inner case 14 is slidably mounted relative to the outer case 12 to facilitate removal one from the other.

8. A trap 10 as claimed in any preceding claim wherein the inner compartment 14 incorporates a lid portion 16.

9. A trap 10 as claimed in claim 8 wherein the lid portion 16 comprises at least one aperture 30,32 to allow access by slugs and/or snails to the inner case 14 but limit other access.

10. A trap 10 as claimed in claim 8 or claim 9 wherein the lid portion 16 includes an upwardly extending hollow protrusion 22 upon which a cover 24 to prevent ingress of rain to the inner compartment is mounted.

11. A trap 10 as claimed in any part of claims 7 to 10 wherein the inner case 14 and/or the lid portion 16 and/or the cover 24 can only be removed from the trap 10 by substantially axial and vertical pull.

12. A trap 10 as claimed in any preceding claim wherein the trap 10 includes replaceable attractant elements secured to the trap 10.

13. A trap 10 as claimed in any preceding claim wherein the trap 10 includes a heating pad to warm the attractant for greater attractant odour.

14. Any novel subject matter or combination including novel subject matter disclosed herein, whether or not within the scope of or relating to the same invention as any of the preceding claims.
